# EUROPÄISCHE PATENTANMELDUNG

(11) **EP 2 515 488 A1**
(43) Veröffentlichungstag der Anmeldung: **24.10.2012**
(21) Anmeldenummer: 11163196.6
(22) Anmeldetag: 20.04.2011
(51) Int. Cl.: H04L 12/56, H04L 12/40

(54) **Funktionsmodul für eine Netzwerkkomponente und Verfahren zur Kopplung einer Netzwerkkomponente an ein Netzwerk**

(71) Anmelder: SIEMENS AKTIENGESELLSCHAFT, 80333 München (DE)
(72) Erfinder: Schäffler, Andreas, 76131 Karlsruhe (DE); Hack, Heiko, 91301 Forchheim (Kersbach) (DE); Kistner, Timo, 76456 Kuppenheim (DE)

(57) **Zusammenfassung**

Funktionsmodul für eine Netzwerkkomponente und Verfahren zur Kopplung einer Netzwerkkomponente an ein Netzwerk.

Die Erfindung betrifft ein Funktionsmodul (1) für eine Netzwerkkomponente (2), die an ein Netzwerk koppelbar ist. Das Funktionsmodul (1) umfasst einen Netzwerk-Controller (3) zur Steuerung oder Verwaltung von Netzwerkfunktionen, wenigstens eine mit dem Netzwerk-Controller (3) verbundene externe Schnittstelle (7) zu dem Netzwerk und wenigstens eine mit dem Netzwerk-Controller (3) verbundene interne Schnittstelle (4, 5, 6) zu der Netzwerkkomponente (2). Ferner betrifft die Erfindung ein Verfahren zur Kopplung einer Netzwerkkomponente (2) an ein Netzwerk mittels eines Funktionsmoduls (1).

## Beschreibung

Die Erfindung betrifft ein Funktionsmodul für eine Netzwerkkomponente, die an ein Netzwerk koppelbar ist, und ein Verfahren zur Kopplung einer Netzwerkkomponente an ein Netzwerk mittels eines derartigen Funktionsmoduls.

Module, welche in Netzwerkkomponenten gesteckt werden können, dienen häufig einer Adaption an das benötigte Übertragungsmedium, beispielsweise für den Anschluss an Kupferkabel oder Lichtwellenleiter. In Netzwerken zur Automatisierungssteuerung wie Profinet (= Process Field Network) treten Netzwerkkomponenten meist als Eingabe-Ausgabe-Geräte auf.

Der Erfindung liegt die Aufgabe zugrunde, ein verbessertes Modul für Netzwerkkomponenten und ein verbessertes Verfahren zur Kopplung von Netzwerkkomponenten an ein Netzwerk anzugeben.

Die Aufgabe wird erfindungsgemäß hinsichtlich des Moduls durch die Merkmale des Anspruchs 1 und hinsichtlich des Verfahrens durch die Merkmale des Anspruchs 6 gelöst.

Vorteilhafte Ausgestaltungen der Erfindung sind Gegenstand der Unteransprüche.

Ein erfindungsgemäßes Modul ist ein Funktionsmodul für eine Netzwerkkomponente, die an ein Netzwerk koppelbar ist. Es umfasst einen Netzwerk-Controller zur Steuerung oder Verwaltung von Netzwerkfunktionen, wenigstens eine mit dem Netzwerk-Controller verbundene externe Schnittstelle zu dem Netzwerk und wenigstens eine mit dem Netzwerk-Controller verbundene interne Schnittstelle zu der Netzwerkkomponente.

Durch die Integration eines Netzwerk-Controllers in das Funktionsmodul ist eine flexible Anbindung des Netzwerk-Controllers an eine Netzwerkkomponente möglich. Dadurch können Netzwerkkomponenten in einfacher und flexibler Weise um die Funktionen des Funktionsmoduls erweitert und zur Steuerung oder Überwachung von Netzwerkfunktionen verwendet werden. Insbesondere können verschiedene und auch mehrere Funktionsmodule an eine Netzwerkkomponente angeschlossen werden. Durch entsprechend ausgeführte Funktionsmodule kann z. B. eine Netzwerkkomponente an unterschiedliche Übertragungsmedien wie Glasleitungen, Kunststoffleitungen oder Kupferleitungen angeschlossen werden.

Vorzugsweise ist eine interne Schnittstelle als Stromversorgungsschnittstelle für die Stromversorgung des Funktionsmoduls über die Netzwerkkomponente ausgebildet. Dadurch kann das Funktionsmodul vorteilhaft über die Netzwerkkomponente mit elektrischer Energie versorgt werden, so dass keine separate Stromversorgung für das Funktionsmodul benötigt wird.

Ferner ist eine interne Schnittstelle vorzugsweise als Netzwerkanbindungsschnittstelle zu einer Netzwerkschnittstelle der Netzwerkkomponente ausgebildet. Dies ermöglicht vorteilhaft eine schnelle Verbindung der Netzwerkkomponente mit dem Netzwerk über die Netzwerkanbindungsschnittstelle des Funktionsmoduls. Dadurch können Daten, die nicht von dem Funktionsmodul verarbeitet werden brauchen, über die Netzwerkanbindungsschnittstelle direkt von der Netzwerkkomponente in das Netzwerk und aus diesem zu der Netzwerkkomponente geleitet werden.

Außerdem weist das Funktionsmodul vorzugsweise eine als PCI-Express-Schnittstelle ausgebildete interne Schnittstelle zu einem PCI-Express (= Peripheral Component Interconnect Express) der Netzwerkkomponente auf. Dadurch kann das Funktionsmodul über den PCI-Express direkt und bidirektional mit einem Hauptprozessor der Netzwerkkomponente kommunizieren.

In einer bevorzugten Ausführung weist der Netzwerk-Controller eine frei programmierbare Steuereinheit auf. Die freie Programmierbarkeit der Steuereinheit ermöglicht vorteilhaft variable Einsatzmöglichkeiten des Funktionsmoduls und dessen Anpassung an neue oder wechselnde Anforderungen und Anwendungen durch eine entsprechende Programmierung der Steuereinheit.

Bei dem erfindungsgemäßen Verfahren wird eine Netzwerkkomponente mittels eines erfindungsgemäßen Funktionsmoduls an ein Netzwerk gekoppelt. Dabei wird das Funktionsmodul über wenigstens eine interne Schnittstelle mit der Netzwerkkomponente und über wenigstens eine externe Schnittstelle mit dem Netzwerk verbunden und mittels des Funktionsmoduls wird wenigstens eine Netzwerkfunktion gesteuert oder verwaltet.

Dies hat die oben bereits genannten Vorteile der flexiblen Erweiterung der Netzwerkkomponente um Netzwerkfunktionen, die über ein oder mehrere erfindungsgemäße Funktionsmodule verfügbar gemacht werden.

Das Funktionsmodul wird über die Netzwerkkomponente vorzugsweise entweder als ein an sie angeschlossenes Gerät oder als eine Unterkomponente oder Funktionserweiterung verwaltet. Die Verwaltung des Funktionsmoduls als an die Netzwerkkomponente angeschlossenes Gerät wird dann bevorzugt, wenn für den Anwender eine Sichtbarkeit des Funktionsmoduls über die Netzwerkkomponente vorteilhaft ist, beispielsweise um gezielt auf das Funktionsmodul zuzugreifen. Die Verwaltung des Funktionsmoduls als Unterkomponente oder Funktionserweiterung der Netzwerkkomponente wird bevorzugt, wenn eine gekapselte bzw. transparente Verwendung des Funktionsmoduls vorteilhaft ist.

Mittels des Funktionsmoduls können verschiedene Netzwerkfunktionen vorteilhaft ausgeführt werden. Derartige Netzwerkfunktionen sind beispielsweise die Überwachung oder Verwaltung weiterer Netzwerkkomponenten wie Eingabe-Ausgabe-Komponenten, Aktoren oder Sensoren.

Alternativ oder zusätzlich kann mittels des Funktionsmoduls eine Übertragung von Daten in dem Netzwerk gesteuert oder überwacht werden. Insbesondere können von dem Funktionsmodul Netzwerkfunktionen einer Sicherungsschicht und/oder einer Vermittlungsschicht gemäß dem OSI-Schichtenmodell (= Open Systems Interconnection Reference Model) übernommen werden, beispielsweise das Aufteilen des Datenstromes in Blöcke oder das Hinzufügen von Folgenummern und Prüfsummen zur Datenübertragung, die Weitervermittelung von Daten oder das Wegesuchen (Routing) und die Verwaltung von Routingtabellen für die Datenübertragung innerhalb des Netzwerkes.

Auch ein Zugang zum dem Netzwerk oder ein Zugriff auf das Übertragungsmedium kann mittels des Funktionsmoduls verwaltet oder überwacht werden, beispielsweise durch Realisierung eines Zugangs- bzw. Zugriffsschutzes.

Weitere Merkmale und Einzelheiten der Erfindung werden im Folgenden anhand von Ausführungsbeispielen unter Bezugnahme auf eine Zeichnung beschrieben. Dabei zeigt:

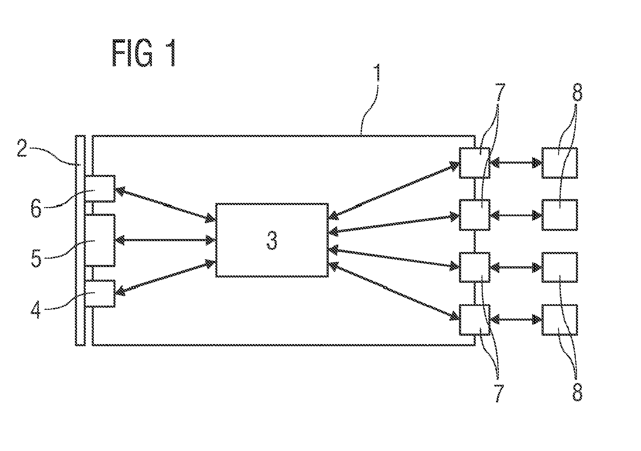

- FIG 1: schematisch ein Ersatzschaltbild eines Funktionsmoduls für eine Netzwerkkomponente.

Figur 1 zeigt schematisch und vereinfacht ein bevorzugtes Ausführungsbeispiel eines erfindungsgemäßen Funktionsmoduls 1 für eine Netzwerkkomponente 2 eines Netzwerks mit einem Feldbus zur Vernetzung von Netzwerkkomponenten 2, 8. Konkret kann das Netzwerk beispielsweise als ein Profinet zur Automatisierungssteuerung ausgebildet sein.

Das Funktionsmodul 1 umfasst einen Netzwerk-Controller 3, beispielsweise einen Feldbus-Controller, zur Steuerung oder Verwaltung von Netzwerkfunktionen, drei interne Schnittstellen 4, 5, 6 zu der Netzwerkkomponente 2 und vier externe Schnittstellen 7 zu dem Netzwerk.

Das Funktionsmodul 1 ist an für funktionsorientierte Module vorgesehene Modulsteckplätze der Netzwerkkomponente 2 angeschlossen.

Eine erste interne Schnittstelle 4 ist eine Stromversorgungsschnittstelle für die Stromversorgung des Funktionsmoduls 1 über die Netzwerkkomponente 2.

Eine zweite interne Schnittstelle 5 ist eine Netzwerkanbindungsschnittstelle zu einer Netzwerkschnittstelle der Netzwerkkomponente 2.

Die dritte interne Schnittstelle 6 ist eine PCI-Express-Schnittstelle zu einem PCI-Express der Netzwerkkomponente 2. Über diese dritte interne Schnittstelle 6 und den PCI-Express der Netzwerkkomponente 2 kann der Netzwerk-Controller 3 direkt und bidirektional mit einem Hauptprozessor der Netzwerkkomponente 2 kommunizieren.

Die externen Schnittstellen 7 sind mit jeweils einer weiteren Netzwerkkomponente 8 verbunden. Durch entsprechende Auslegung der externen Schnittstellen 7 kann das Funktionsmodul 1 zur Verbindung mit unterschiedlichen Übertragungsmedien, beispielsweise mit Glas-, Kunststoff- oder Kupferleitungen ausgebildet sein.

Der Netzwerk-Controller 3 weist eine frei programmierbare Steuereinheit auf. Zusammen mit der dritten internen Schnittstelle 6 und dem PCI-Express der Netzwerkkomponente 2 ist somit ein frei programmierbarer bidirektionaler Kanal zwischen einem Hauptprozessor der Netzwerkkomponente 2 und dem Netzwerk-Controller 3 verfügbar, der sehr variable Einsatzmöglichkeiten eröffnet.

Mittels entsprechender Software werden Informationen zwischen der Netzwerkkomponente 2 und dem Funktionsmodul 1 ausgetauscht. Daten, die von dem Funktionsmodul 1 nicht verarbeitet werden brauchen, werden über die zweite interne Schnittstelle 5 direkt von der Netzwerkkomponente 2 an das Netzwerk geleitet oder aus ihm empfangen.

Mittels des Funktionsmoduls 1 werden die weiteren Netzwerkkomponenten 8 überwacht, gesteuert oder diagnostiziert. Die weiteren Netzwerkkomponenten 8 können beispielsweise an das Netzwerk angeschlossene Eingangs-Ausgangs-Komponenten, beispielsweise Profinet IO-Devices, Sensoren oder Aktoren sein.

In alternativen Ausführungsbeispielen oder Ausgestaltungen des obigen Ausführungsbeispiels werden von dem Funktionsmodul 1 alternativ oder zusätzlich Netzwerkfunktionen einer Sicherungsschicht und/oder einer Vermittlungsschicht gemäß dem OSI-Schichtenmodell realisiert. Auch können beispielsweise virtuelle Netze realisiert oder Zugänge zu übergeordneten Netzen geschaffen werden. Ferner kann mittels des Funktionsmoduls 1 ein abgesicherter Zugang zu dem Netzwerk oder ein Zugangsschutz realisiert werden.

In jedem dieser Ausführungsbeispiele kann das Funktionsmodul 1 seine Netzwerkfunktionen völlig autark ausführen oder zu diesem Zweck Daten mit der Netzwerkkomponente 2 austauschen.

## Patentansprüche

1. Funktionsmodul (1) für eine Netzwerkkomponente (2), die an ein Netzwerk koppelbar ist, umfassend einen Netzwerk-Controller (3) zur Steuerung oder Verwaltung von Netzwerkfunktionen, wenigstens eine mit dem Netzwerk-Controller (3) verbundene externe Schnittstelle (7) zu dem Netzwerk und wenigstens eine mit dem Netzwerk-Controller (3) verbundene interne Schnittstelle (4, 5, 6) zu der Netzwerkkomponente (2).

2. Funktionsmodul (1) nach Anspruch 1,
**gekennzeichnet durch** eine als Stromversorgungsschnittstelle ausgebildete interne Schnittstelle (4, 5, 6) für die Stromversorgung des Funktionsmoduls (1) über die Netzwerkkomponente (2).

3. Funktionsmodul (1) nach einem der vorhergehenden Ansprüche,
**gekennzeichnet durch** eine als Netzwerkanbindungsschnittstelle ausgebildete interne Schnittstelle (4, 5, 6) zu einer Netzwerkschnittstelle der Netzwerkkomponente (2).

4. Funktionsmodul (1) nach einem der vorhergehenden Ansprüche,
**gekennzeichnet durch** eine als PCI-Express-Schnittstelle ausgebildete interne Schnittstelle (4, 5, 6) zu einem PCI-Express der Netzwerkkomponente (2).

5. Funktionsmodul (1) nach einem der vorhergehenden Ansprüche,
**dadurch gekennzeichnet, dass** der Netzwerk-Controller (3) eine frei programmierbare Steuereinheit aufweist.

6. Verfahren zur Kopplung einer Netzwerkkomponente (2) an ein Netzwerk mittels eines Funktionsmoduls (1) gemäß einem der vorhergehenden Ansprüche, wobei das Funktionsmodul (1) über wenigstens eine interne Schnittstelle (4, 5, 6) mit der Netzwerkkomponente (2) und über wenigstens eine externe Schnittstelle (7) mit dem Netzwerk verbunden wird und mittels des Funktionsmoduls (1) wenigstens eine Netzwerkfunktion gesteuert oder verwaltet wird.

7. Verfahren nach Anspruch 6,
**dadurch gekennzeichnet, dass** das Funktionsmodul (1) über die Netzwerkkomponente (2) als ein an sie angeschlossenes Gerät oder als eine Unterkomponente oder Funktionserweiterung der Netzwerkkomponente (2) verwaltet wird.

8. Verfahren nach Anspruch 6 oder 7,
**dadurch gekennzeichnet, dass** mittels des Funktionsmoduls (1) wenigstens eine weitere Netzwerkkomponente (8) überwacht oder verwaltet wird.

9. Verfahren nach Anspruch 8,
**dadurch gekennzeichnet, dass** als eine weitere Netzwerkkomponente (8) eine Eingabe-Ausgabe-Komponente, ein Aktor oder ein Sensor überwacht oder verwaltet wird.

10. Verfahren nach einem der Ansprüche 6 bis 9,
**dadurch gekennzeichnet, dass** mittels des Funktionsmoduls (1) eine Übertragung von Daten in dem Netzwerk gesteuert oder überwacht wird.

11. Verfahren nach einem der Ansprüche 6 bis 10,
**dadurch gekennzeichnet, dass** mittels des Funktionsmoduls (1) ein Zugang zu dem Netzwerk verwaltet oder überwacht wird.
